# EUROPÄISCHE PATENTSCHRIFT

(11) **EP 2 091 787 B1**
(45) Veröffentlichungstag und Bekanntmachung des Hinweises auf die Patenterteilung: **09.03.2011**
(21) Anmeldenummer: 07846911.1
(22) Anmeldetag: 29.11.2007
(51) Int. Cl.: B60R 19/34, F16F 7/12

(54) **ENERGIEABSORPTIONSVORRICHTUNG**
ENERGY ABSORPTION DEVICE
DISPOSITIF D'ABSORPTION D'ÉNERGIE

(30) Priorität: 08.12.2006 DE 202006018616 U; 08.12.2006 DE 102006057993
(43) Veröffentlichungstag der Anmeldung: 26.08.2009
(73) Patentinhaber: Cosma Engineering Europe AG, 2522 Oberwaltersdorf (AT)
(72) Erfinder: BLÜMEL, Michael, 2620 Flatz (AT); AKGÜN, Toros, 8041 Graz (AT)
(74) Vertreter: Grünecker, Kinkeldey, Stockmair & Schwanhäusser Anwaltssozietät
(86) Internationale Anmeldenummer: PCT/EP2007/010386
(87) Internationale Veröffentlichungsnummer: WO 2008/067951

(56) Entgegenhaltungen:
- EP-A- 1 714 834
- DE-A1- 1 931 844
- DE-A1- 10 324 403
- US-A1- 2002 167 183
- US-A1- 2004 169 383
- US-B1- 6 702 345

## Beschreibung

Die vorliegende Erfindung betrifft eine Energieabsorptionsvorrichtung mit einem ersten hohlen Längsabschnitt erster Querschnittsweite und einem zweiten hohlen Längsabschnitt zweiter Querschnittsweite sowie einem gestülptem Übergangsbereich zwischen den hohlen Längsabschnitten.

Derartige Energieabsorptionsvorrichtungen werden in Fahrzeugen eingesetzt und beispielsweise zwischen Stoßfänger und Karosserie angeordnet. Bei einem Unfall verformen sie sich plastisch und absorbieren hierdurch Energie. Bei leichten Unfällen kann das Energieabsorptionsvermögen ausreichen, um ein plastisches Verformen der Karosserie zu verhindern.

Um ein einwandfreies Verformen, das heißt Zusammenteleskopieren, zu gewährleisten, wird die Energieabsorptionsvorrichtung parallel zur Fahrzeuglängsrichtung ausgerichtet angeordnet.

In der Praxis können jedoch Unfallkräfte auftreten, welche schräg zur Fahrzeuglängsrichtung wirken. In einem solchen Fall kann es passieren, dass sich der stoßfängerseitige hohle Längsabschnitt der Energieabsorptionsvorrichtung bezüglich des karosserieseitigen hohlen Längsabschnittes schräg stellt. Um eine solche Schrägstellung zu regulieren, das heißt beide hohlen Längsabschnitte wieder gerade zueinander auszurichten, ist aus der DE 103 24 403 A1 eine spezielle Gestaltung des Übergangsbereiches bekannt. Im Übergangsbereich ist außen eine große U-förmige Rundung vorgesehen. Mit dieser kommt der innere hohle Längsabschnitt in Anlage und wird beim Zusammenteleskopieren wieder gerade ausgerichtet. Eine innere U-förmige Rundung des Übergangsbereiches ist mit einem kleinen Radius ausgebildet, wodurch der innere hohle Längsabschnitt stets nahe an der äußeren großen Rundung gelagert ist.

Eine ähnliche Anordnung, bei welcher ein stoßfängerseitiger hohler Längsabschnitt wieder geradegestellt wird, ist aus der US 6,702,345 B1 bekannt.

Eine Möglichkeit, schräg wirkende Unfallkräfte zu absorbieren, ist aus der US 6,802,548 B2 bekannt. Hier wird eine gattungsgemäße Energieabsorptionsvorrichtung verwendet, welche schräg zur Fahrzeuglängsrichtung ausgerichtet ist. Somit wirkt eine schräge Unfallkraft in Längsrichtung in der Energieabsorptionsvorrichtung, wodurch diese einwandfrei zusammenteleskopieren kann.

Die US 6,802,548 B2 schlägt die Verwendung eines becherförmigen Stoßabsorptionselementes vor, welches der Energieabsorptionsvorrichtung stoßfängerseitig vorgelagert ist. Im Falle einer schräg zur Längsachse der Energieabsorptionsvorrichtung wirkenden Unfallkraft wird mit Hilfe des becherförmigen Stoßabsorptionselementes ein Schwenken des stoßfängerseitigen hohlen Längsabschnittes verhindert oder zumindest weitestgehend minimiert.

Die vorliegende Erfindung betrifft ferner eine Energieabsorptionsvorrichtung für eine Stoßfängeranordnung eines Fahrzeugs, mit einem zum Umformen bestimmten, schräg zur Fahrzeuglängsrichtung ausgerichteten hohlen Längsabschnitt und einem sich daran anschließenden, gestülpten Bereich, an welchem ein Befestigungsabschnitt der Energieabsorptionsvorrichtung vorgesehen ist, welcher eine Befestigungsebene der Energieabsorptionsvorrichtung definiert.

Aus der DE 19 31 844 A ist eine Energieabsorptionsvorrichtung bekannt, welche ein zum Umformen bestimmtes Rohr und einen sich daran anschließenden gestülpten Bereich aufweist, an welchen sich ein Ansatzstück anschließt, das sich auswärts erstreckt. Das Ansatzstück ist an einem Führungsteil befestigt, das als ringförmige Scheibe ausgebildet ist. Das Ansatzstück und das Führungsteil sind parallel zur Querschnittsebene des Rohres ausgerichtet. Auf diese Weise kann sich das Rohr einwandfrei stülpend verformen und durch die Öffnung des Führungsteiles hindurchtreten.

Der vorliegenden Erfindung liegt die Aufgabe zugrunde, eine gattungsgemäße Energieabsorptionsvorrichtung dahingehend zu verbessern, dass auf möglichst einfache Weise schräg wirkende Unfallkräfte mit guter Effizienz absorbiert werden können, sowie ein Verfahren zum Herstellen einer solchen Energieabsorptionsvorrichtung zu schaffen.

Die Aufgabe wird erfindungsgemäß gelöst mit einer Energieabsorptionsvorrichtung mit den Merkmalen des Anspruches 1.

Mit der schrägen Ausrichtung des hohlen Längsabschnittes zur axialen Richtung des Fortsetzungsabschnittes können schräg wirkende Unfallkräfte gut aufgefangen und absorbiert werden. Der Umformvorgang verläuft überraschend problemlos und es kann ein ähnlich guter Kraftverlauf erreicht werden wie bei Energieabsorptionsvorrichtungen, bei welchen die axiale Richtung eines Fortsetzungsabschnittes parallel zur axialen Richtung eines hohlen Längsabschnittes ausgerichtet ist.

Vorteilhafterweise kann die axiale Richtung des hohlen Längsabschnittes oder des Fortsetzungsabschnittes schräg zu einer Fahrzeuglängsrichtung ausgerichtet sein und die axiale Richtung des jeweils anderen Abschnittes im Wesentlichen parallel zur Fahrzeuglängsrichtung verlaufen. Dabei sind schräge Unfallkräfte gut aufnehmbar und die Kräfte sind noch verhältnismäßig gerade in die Karosserie einleitbar, beispielsweise in einen Längsträger der Karosserie, an welchem die Energieabsorptionsvorrichtung angebracht sein kann.

Besonders bevorzugt kann der hohle Längsabschnitt um etwa 5° bis 20° schräg zur axialen Richtung des Fortsetzungsabschnittes ausgerichtet sein, vorzugsweise um etwa 8° bis 12°, besonders bevorzugt um etwa 10°. Auf diese Weise sind schräge Unfallkräfte gut auffangbar und absorbierbar und trotzdem sind auch parallel zur Fahrzeuglängsrichtung wirkende Kräfte noch gut aufnehmbar und absorbierbar.

Besonders günstig kann eine Führung vorgesehen sein, auf welcher der hohle Längsabschnitt beim Umformen abrollt. Auf diese Weise ergibt sich eine Teleskopierbewegung mit guter Stabilität.

Vorzugsweise kann der zum Umformen bestimmte hohle Längsabschnitt schräg zur Fahrzeuglängsrichtung ausgerichtet sein und als Fortsetzungsabschnitt ein Befestigungsabschnitt der Energieabsorptionsvorrichtung vorgesehen sein, welcher eine Befestigungsebene der Energieabsorptionsvorrichtung definiert, wobei die Befestigungsebene in einem Ausgangszustand vor einer Energieabsorption schräg zur Querrichtung des hohlen Längsabschnittes ausgerichtet ist. Mit der schrägen Ausrichtung der Querrichtung des hohlen Längsabschnittes zur Befestigungsebene sind schräg zur Fahrzeuglängsrichtung wirkende Unfallkräfte gut absorbierbar. Der Umformvorgang verläuft überraschend problemlos und es kann etwa eine Effizienz bei der Energieabsorption erreicht werden, wie sie bei Energieabsorptionsvorrichtungen möglich sind, bei welchen die Befestigungsebene parallel zur Querrichtung des hohlen Längsabschnittes ausgerichtet ist.

Vorteilhafterweise kann die Befestigungsebene etwa senkrecht zur Fahrzeuglängsrichtung ausgerichtet sein. Damit ist der hohle Längsabschnitt schräg zur Fahrzeuglängsrichtung ausgerichtet und kann schräg wirkende Unfallkräfte im Wesentlichen entsprechend seiner Längsrichtung aufnehmen. Mit dem Befestigungsabschnitt können die verbleibenden Kräfte weitestgehend in Fahrzeuglängsrichtung weitergegeben werden.

Bevorzugterweise kann der gestülpte Bereich an einem Endbereich der Energieabsorptionsvorrichtung ausgebildet sein. So setzt das umstülpende Verformen des hohlen Längsabschnittes am Ende der Energieabsorptionsvorrichtung ein.

Besonders günstig kann die Energieabsorptionsvorrichtung in Richtung des Längsabschnittes etwa in Höhe des gestülpten Bereiches an einer Karosseriestruktur befestigbar sein. Auf diese Weise kann die Energieabsorptionsvorrichtung mit guter Stabilität gelagert werden. Zudem kann sich der hohle Längsabschnitt in seiner Ausrichtung gut an Unfallkräfte anpassen, deren Richtung von der ursprünglichen Richtung seiner Längsachse abweicht.

Besonders vorteilhaft kann der gestülpte Bereich eine nur U-förmige Stülpform haben. Damit ist der Übergang vom Längsabschnitt zum Befestigungsabschnitt einfach und auch auf engerem Raum realisierbar.

Besonders bevorzugt kann der Befestigungsabschnitt flanschartig, krempenartig oder kragenartig ausgebildet sein. So ist die Energieabsorptionsvorrichtung leicht und flächig an einem Fahrzeug montierbar.

Besonders günstig kann eine Fahrzeugstruktur mit einer Energieabsorptionsvorrichtung mit wenigstens einer der vorangehend genannten Ausgestaltungen vorgesehen sein, wobei die Fahrzeugstruktur eine Wandung aufweist, welche eine Führung des hohlen Längsabschnittes bildet, auf welcher dieser beim Umformen abrollbar ist. So sind für ein geführtes Teleskopieren des hohlen Längsabschnittes bestehende Strukturen eines Fahrzeuges nutzbar, beispielsweise ein Längsträger, insbesondere ein Innenraum hiervon. Mit dem Abrollen verläuft die Berührung von Wandung und umstülpendem Längsabschnitt problemlos. Vorzugsweise kann die Energieabsorptionsvorrichtung einen ersten hohlen Längsabschnitt erster Querschnittsweite und einen zweiten hohlen Längsabschnitt zweiter Querschnittsweite sowie als gestülpten Bereich einen gestülpten Übergangsabschnitt zwischen den hohlen Längsabschnitten aufweisen, wobei der erste hohle Längsabschnitt und der zweite hohle Längsabschnitt in einem Ausgangszustand vor einer Energieabsorption schräg zueinander ausgerichtet sind. Mit der schrägen Ausrichtung der hohlen Längsabschnitte können schräg wirkende Unfallkräfte gut aufgefangen und absorbiert werden. Dabei wird überraschenderweise ein ähnlich guter Kraftverlauf wie bei Energieabsorptionsvorrichtungen mit gerade ausgerichteten Längsabschnitten erreicht, das heißt es wird eine gute Effizienz bei der Energieabsorption erreicht.

Bevorzugt kann der stülpfähigere der hohlen Längsabschnitte schräg zur Fahrzeugrichtung ausgerichtet sein. So kann die schräge Unfallkraft besonders effizient absorbiert werden. Der zum Umformen bestimmte Längsabschnitt kann die Unfallkraft in seiner Längsrichtung aufnehmen.

Besonders günstig kann der hohle Längsabschnitt geringerer Querschnittsbreite der stülpfähigere hohle Längsabschnitt der Energieabsorptionsvorrichtung sein. So kann der hohle Längsabschnitt größerer Querschnittsweite zum Stabilisieren genutzt werden, er hat quasi den breiteren Stützapparat.

Besonders vorteilhaft kann der hohle Längsabschnitt größerer Querschnittsweite eine Führung des hohlen Längsabschnittes geringerer Querschnittsweite bilden. Beim Zusammenteleskopieren kann sich der Längsabschnitt geringerer Querschnittsweite am Längsabschnitt größerer Querschnittsweite abstützen und darauf abrollen. Auf diese Weise ergibt sich eine Teleskopierbewegung mit guter Stabilität.

Die Aufgabe wird ferner gelöst mit einem Verfahren mit den Merkmalen des Anspruches 16.

Mit diesem Verfahren ist eine Energieabsorptionsvorrichtung mit schräg ausgerichteten hohlen Längsabschnitten einfach und mit guter Präzision herstellbar, insbesondere bezüglich der Winkligkeit der hohlen Längsabschnitte zueinander.

Besonders vorteilhaft kann das Rohr erster Querschnittsweite mit Hilfe eines Innenhochdruckumformens abschnittsweise auf zweite Querschnittsweite vergrößert werden. Hierdurch lässt sich der Längsabschnitt größerer Querschnittsweite mit guter Präzision herstellen und gleichzeitig durch das Verformen verfestigen, das heißt er erhält einen höhere Verformungswiderstand.

Ausführungsformen der vorliegenden Erfindung sind in den Figuren gezeigt und werden nachfolgend beschrieben. Es zeigen:
- Figur 1: eine perspektivische Ansicht einer Energieabsorptionsvorrichtung einer ersten Ausführungsform der Erfindung,
- Figur 2: eine Seitenansicht der Energieabsorptionsvorrichtung aus Figur 1,
- Figur 3: eine Längsschnittansicht der Energieabsorptionsvorrichtung gemäß einer Li- nie III-III in Figur 2,
- Figur 4: eine schematische Ansicht einer Stoßfängeranordnung und einer Karosserie- struktur mit hierzwischen angeordneter Energieabsorptionsvorrichtung, wobei nur die Profile der Schnittkonturen dargestellt sind,
- Figur 5: eine perspektivische Ansicht einer Energieabsorptionsvorrichtung einer zwei- ten Ausführungsform der Erfindung,
- Figur 6: eine Draufsicht auf die Energieabsorptionsvorrichtung gemäß Figur 5,
- Figur 7: eine Längsschnittansicht der Energieabsorptionsvorrichtung gemäß der Dar- stellung in Figur 6,
- Figur 8: eine schematische Darstellung einer Karosseriestruktur und einer Stoßfän- geranordnung eines Fahrzeugs mit hierzwischen vorgesehener Energieab- sorptionsvorrichtung gemäß Figur 5, wobei Querschnittskonturen dargestellt sind;
- Figur 9 bis 11: Simulationsdarstellungen der Energieabsorptionsvorrichtung gemäß Figur 8 in einem Ausgangszustand, einem ersten Verformungszustand und einem zwei- ten Verformungszustand,
- Figur 12: ein Kraft-Weg-Diagramm des Verformungsablaufes der Energieabsorptions- vorrichtung,
- Figur 13: eine Längsschnittansicht eines Rohres, das als Ausgangsmaterial zum Her- stellen der erfindungsgemäßen Energieabsorptionsvorrichtung gemäß Figur 5 dient,
- Figur 14: Veranschaulichung des Rohres aus Figur 13 nach einem Innenhochdruckum- formen gemäß einer ersten Ausführungsform eines erfindungsgemäßen Her- stellungsverfahrens, und
- Figur 15 und 16: Veranschaulichung einer zweiten Ausführungsform des erfindungsgemäßen Her- stellungsverfahrens.

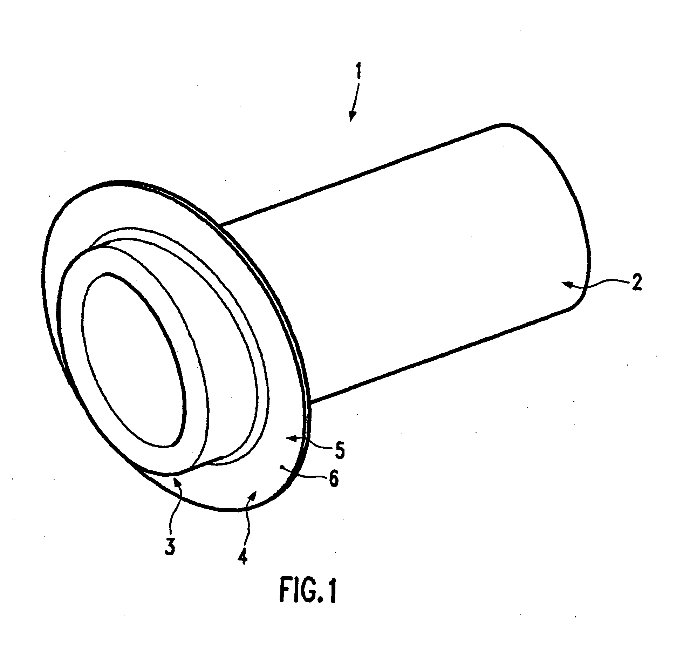

In Figur 1 ist eine Energieabsorptionsvorrichtung 1 einer ersten Ausführungsform der Erfindung in einer perspektivischen Ansicht gezeigt. Die Energieabsorptionsvorrichtung 1 weist einen zum Umformen bestimmten hohlen Längsabschnitt 2 auf. An den hohlen Längsabschnitt 2 schließt sich ein gestülpter Bereich 3 an, an welchem als Fortsetzungsabschnitt ein Befestigungsabschnitt 4 vorgesehen ist. Der Befestigungsabschnitt definiert eine Befestigungsebene der Energieabsorptionsvorrichtung 1.

In dieser Ausführungsform der Erfindung ist der Befestigungsabschnitt 4 etwa flanschartig ausgebildet und die Befestigungsebene 5 wird durch eine Anlagefläche 6 des Befestigungsabschnittes 4 auf Seiten des gestülpten Bereiches 3 bestimmt.

Es ist auch möglich, den Befestigungsabschnitt krempenartig oder kragenartig auszubilden.

Der hohle Längsabschnitt 2 ist in dieser Ausführungsform der Erfindung rohrförmig ausgebildet. Es sind jedoch auch andere offene oder geschlossene hohlkörperartige Formen möglich, beispielsweise mit eckigem Querschnitt.

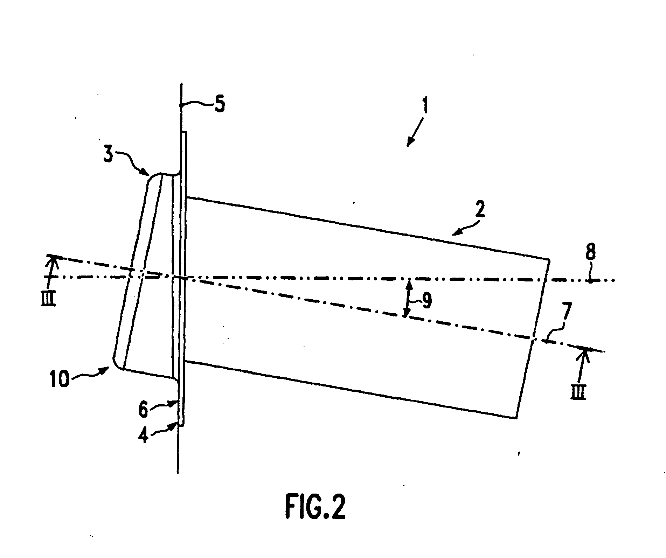

In Figur 2 ist die Energieabsorptionsvorrichtung 1 in einer Seitenansicht gezeigt. Aus dieser Darstellung geht besonders deutlich hervor, dass die Befestigungsebene 5 schräg zur Querrichtung des hohlen Längsabschnittes 2 ausgerichtet ist. Das heißt sie verläuft schräg zu einer nicht gezeigten, senkrecht zur Längsachse 7 des hohlen Längsabschnittes 2 verlaufenden Geraden. Anders ausgedrückt verläuft eine Normale 8 der Befestigungsebene 5 schräg zur Längsachse 7 des hohlen Längsabschnittes 2. Somit ist der hohle Längsabschnitt schräg zur axialen Richtung des Befestigungsabschnittes ausgerichtet. Die Normale 8 verläuft in der axialen Richtung des Befestigungsabschnittes.

Die Befestigungsebene und die Querrichtung schließen einen Winkel von etwa 5° bis 20° ein, vorzugsweise einen Winkel von 8° bis 12°, und besonders bevorzugt einen Winkel von etwa 10°. In anderen Worten schließen die Normale 8 und die Längsachse 7 des hohlen Längsabschnittes 2 einen Winkel 9 der voranstehend beschriebenen Größe ein. Mit dieser Winkligkeit können schräg zur Fahrzeuglängsrichtung wirkende Unfallkräfte besonders gut aufgefangen und absorbiert werden, beispielsweise Unfallkräfte, die um 10° schräg zur Fahrzeuglängsrichtung wirken. Aber auch parallel zur Fahrzeuglängsrichtung wirkende Unfallkräfte können noch gut aufgefangen und absorbiert werden.

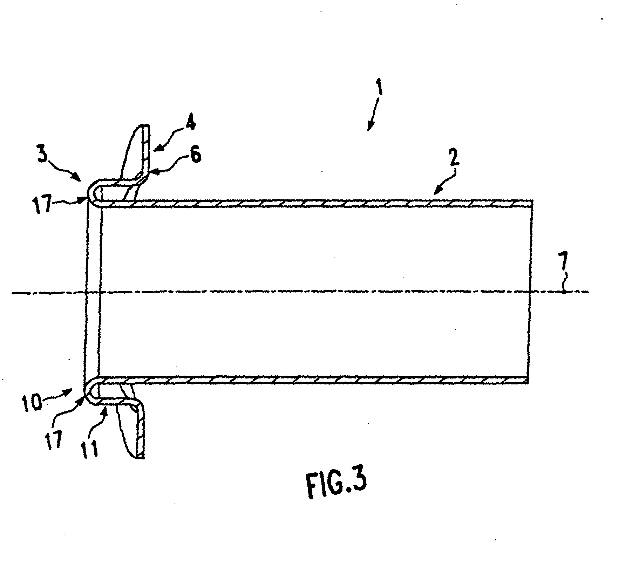

In Figur 3 ist eine Längsschnittansicht der Energieabsorptionsvorrichtung gemäß der Linie III-III in Figur 2 gezeigt. Hieraus geht hervor, dass der in einem Endbereich 10 der Energieabsorptionsvorrichtung ausgebildete gestülpte Bereich 3 eine rein U-förmige Stülpform mit einem U-Bogen 17 hat. Vom äußeren U-Abschnitt 11 geht der gestülpte Bereich 3 direkt in den Befestigungsabschnitt 4 über.

In dieser Ausführungsform der Erfindung beginnt der Befestigungsabschnitt 4 in unmittelbarer Nähe des hohlen Längsabschnittes 2. Das heißt der Abstand des Befestigungsabschnittes 4 zum hohlen Längsabschnitt 2 ist klein im Vergleich zur Querschnittsweite des hohlen Längsabschnittes 2. Zudem befindet sich der Befestigungsabschnitt in Richtung des hohlen Längsabschnittes etwa in Höhe des gestülpten Bereiches 3.

Durch das Vorsehen des Befestigungsabschnittes 4 im Bereich des Endbereiches 10 der Energieabsorptionsvorrichtung und nahe des zweiten hohlen Längsabschnittes 2 ist die Energieabsorptionsvorrichtung stabil und direkt an einer Fahrzeugstruktur lagerbar. Dabei bleibt ein dem gestülpten Bereich 3 gegenüberliegendes Ende 12 der Energieabsorptionsvorrichtung ausreichend bewegbar, um sich an Unfallkräfte anzupassen, deren Richtung schräg zur Längsachse 7 des hohlen Längsabschnittes verläuft. Über den gestülpten Bereich 3 kann ein Schwenken des hohlen Längsabschnittes 2 ausgeglichen werden, wobei in einem Umfangsabschnitt ein stülpendes Verformen des hohlen Längsabschnittes auftreten kann.

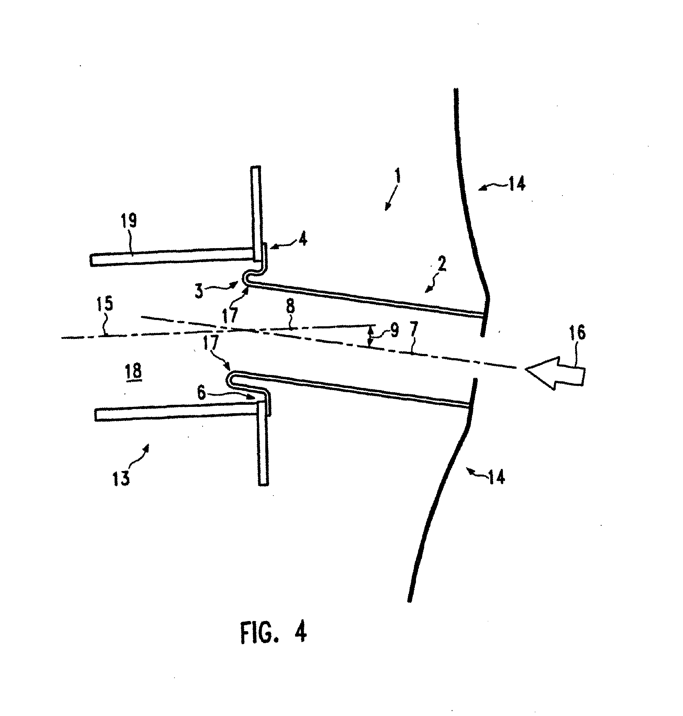

Figur 4 zeigt die Energieabsorptionsvorrichtung schematisch in einem zwischen einer Karosseriestruktur 13 und einer.Stoßfängeranordnung 14 angeordneten Lage. Die Karosseriestruktur 13 kann beispielsweise ein Längsträger sein, dessen Längsrichtung 15 parallel zur Fahrzeuglängsrichtung ist.

Die Energieabsorptionsvorrichtung 1 ist so an der Karosseriestruktur 13 befestigt, dass die Normale 8 der Befestigungsebene 5 und die Längsrichtung 15 der Karosseriestruktur parallel zueinander verlaufen. In dieser Ausführungsform der Erfindung fallen sie sogar zusammen. Dementsprechend ist die Befestigungsebene 5 etwa senkrecht zur Fahrzeuglängsrichtung ausgerichtet und die Längsachse 7 des hohlen Längsabschnittes 2 verläuft im Winkel der genannten Größe schräg zur Fahrzeuglängsrichtung.

In den Figuren 1 bis 4 ist die Energieabsorptionsvorrichtung in einem Ausgangszustand vor einer Energieabsorption gezeigt. Wirkt eine Unfallkraft 16 etwa in Richtung der Längsachse 7 des hohlen Längsabschnittes 2, verformt sich die Energieabsorptionsvorrichtung stülpend plastisch. Dabei wird der U-Bogen 17 des gestülpten Bereiches 3 aufgebogen und immer neues Material des sich stülpend verformenden hohlen Längsabschnittes 2 bildet einen vorangehenden Bogen.

Der hohle Längsabschnitt teleskopiert in einen Hohlraum 18 der Karosseriestruktur 13 hinein. Bei fortschreitendem, energieabsorbierenden Hineinteleskopieren kommt die führende Rundung in Anlage mit einer Wandung 19 der Karosseriestruktur 13. Die Wandung 19 dient dem hohlen Längsabschnitt als Abstützung und Führung beim weiteren umstülpenden Verformen. Der hohle Längsabschnitt kann auf der Wandung 19 umstülpend abrollen. Damit verläuft ein Kontakt mit der Wandung problemlos.

Die Energieabsorptionsvorrichtung kann mit einem Tiefziehverfahren aus einem Flachmaterial hergestellt werden, z. B. aus einer Ronde. Dabei wird ein Teil des Flachmaterials zum Ausbilden des hohlen Längsabschnittes 2 und des gestülpten Bereiches 3 verwendet. Ein Teil des Flachmateriales bleibt flach und wird zum Ausbilden des Befestigungsabschnittes 4 genutzt.

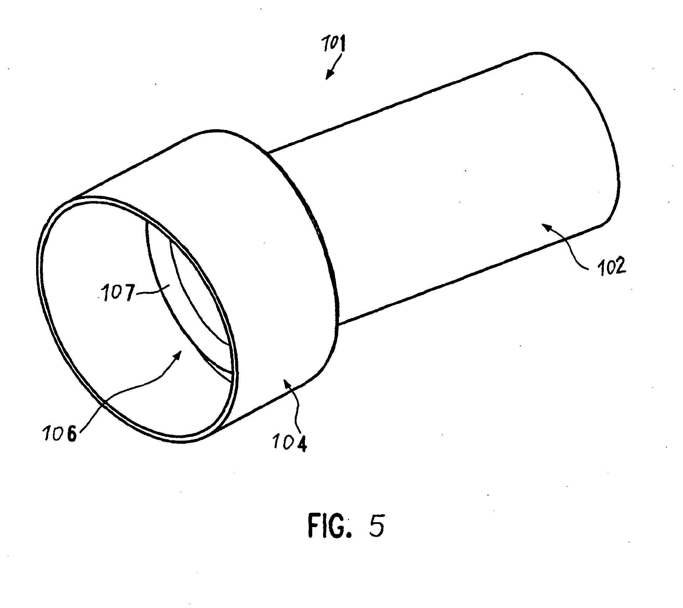

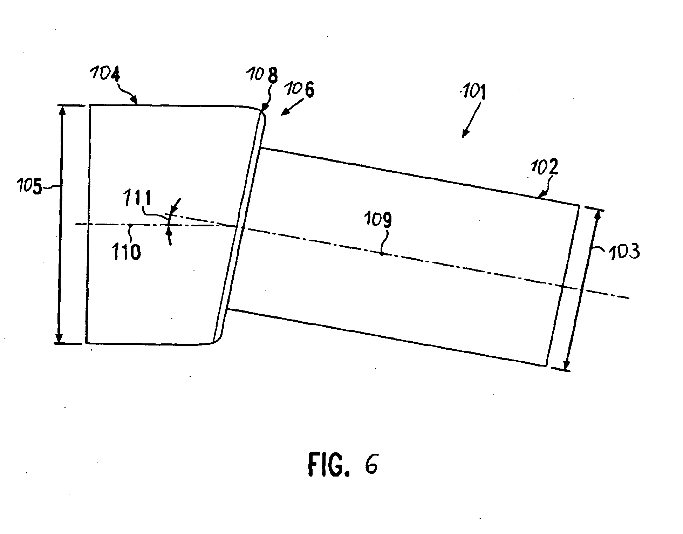

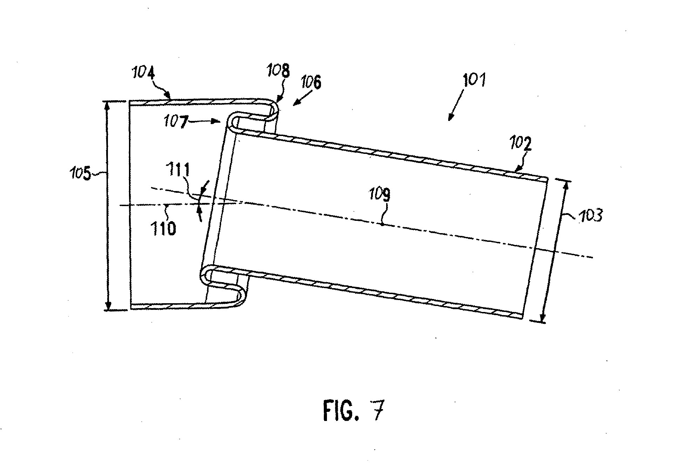

In Figur 5 ist eine Energieabsorptionsvorrichtung 101 einer zweiten Ausführungsform der Erfindung in einer perspektivischen Ansicht dargestellt, in Figur 6 in einer Draufsicht und in Figur 7 in einer Längsschnittansicht gemäß Figur 6. Die Energieabsorptionsvorrichtung 101 weist einen ersten hohlen Längsabschnitt 102 auf, welcher eine erste Querschnittsweite 103 hat, und einen zweiten hohlen Längsabschnitt 104, welcher eine zweite Querschnittsweite 105 hat. In diesem Ausführungsbeispiel ist die erste Querschnittsweite 103 kleiner als die zweite Querschnittsweite 105.

Der erste und zweite hohle Längsabschnitt 102, 104 sind in dieser Ausführungsform rohrförmig ausgebildet. Es sind jedoch auch andere offene oder geschlossene hohlkörperartige Formen möglich, beispielsweise mit einer eckigen Querschnittsform.

Zwischen den beiden hohlen Längsabschnitten 102, 104 ist ein gestülpter Übergangsbereich 106 ausgebildet.

Man könnte auch sagen, dass sich an einen zum Umformen bestimmten hohlen Längsabschnitt ein gestülpter Bereich anschließt, welcher mit einem Fortsetzungsabschnitt verbunden ist. Je nach Ausführungsform kann der erste hohle Längsabschnitt oder der zweite hohle Längsabschnitt der Fortsetzungsabschnitt sein.

Der gestülpte Übergangsbereich weist ein im Wesentlichen S-förmiges oder doppelt-U-förmiges Längsschnittprofil auf, wie aus Figur 7 hervorgeht. Ein erster U-Bogen 107 geht vom ersten hohlen Längsprofil 102 aus und ist innerhalb des zweiten hohlen Längsabschnittes 104 angeordnet. Ein zweiter U-Bogen 108 geht vom zweiten hohlen Längsprofil 104 aus und ist außerhalb des ersten hohlen Längsabschnittes 102 angeordnet und umgibt selbigen.

Der erste hohle Längsabschnitt 102 und der zweite hohle Längsabschnitt 104 sind schräg zueinander ausgerichtet, wobei ihre Längsachsen 109, 110 einen Winkel 111 miteinander einschließen. Der Winkel 111 ist im Bereich von etwa 5 bis 20° gewählt, vorzugsweise im Bereich von etwa 8 bis 12°, und besonders bevorzugt im Bereich von etwa 10°. So können schräg wirkende Unfallkräfte gut abgebaut werden, insbesondere wie bei Unfällen mit etwa 10° Neigung zur Fahrzeuglängsrichtung.

In dieser Ausführungsform der Erfindung ist die Energieabsorptionsvorrichtung einstückig ausgebildet.

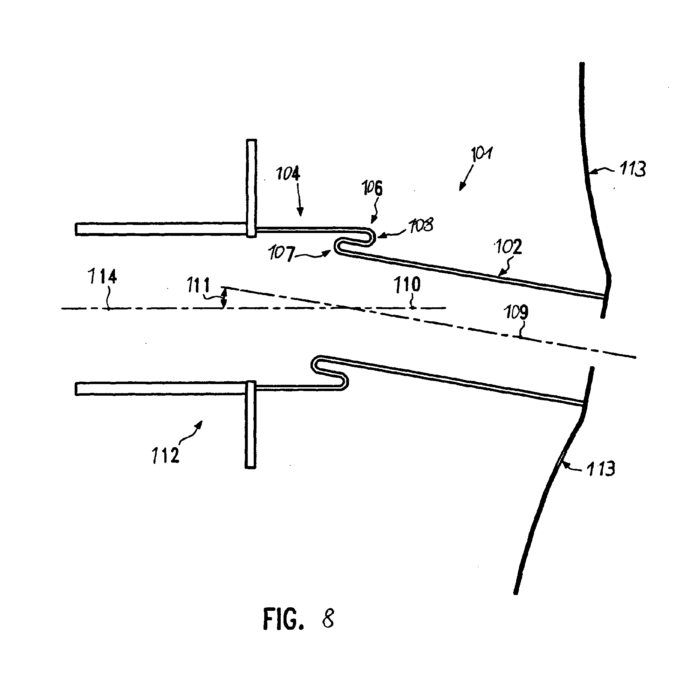

In Figur 8 ist veranschaulicht, wie die Energieabsorptionsvorrichtung 101 in einem Fahrzeug angeordnet sein kann. Im vorliegenden Ausführungsbeispiel ist sie zwischen einer Karosseriestruktur 112 und einer Stoßfängeranordnung 113 vorgesehen. Dabei ist die Darstellung in Figur 8 eine schematische Ansicht der Längsschnittprofile.

Die Stoßfängeranordnung 113 kann ein Querträger oder Querprofil eines Stoßfängers sein, und die Karosseriestruktur 112 kann ein Längsträger einer Fahrzeugkarosserie sein. In diesem Ausführungsbeispiel ist der zweite hohle Längsabschnitt größerer Querschnittsweite an der Karosseriestruktur 112 befestigt und seine Längsachse 110 verläuft parallel zur Längsachse 114 der Karosseriestruktur 112, wobei diese beiden Längsachsen 110, 114 in dieser Ausführungsform der Erfindung zusammenfallen.

Die Längsachse 114 der Karosseriestruktur 112 verläuft parallel zur Längsrichtung des Fahrzeugs. Damit ist der erste hohle Längsabschnitt 102 geringerer Querschnittsweite schräg zur Fahrzeuglängsrichtung verlaufend angeordnet. Die Längsachse 109 des ersten hohlen Längsabschnittes schließt folglich den gleichen Winkel mit der Fahrzeuglängsrichtung ein wie mit der Längsachse 110 des zweiten hohlen Längsabschnittes 104.

Es sind auch Ausführungsformen möglich, in denen die Längsachse des hohlen Längsabschnittes geringerer Querschnittsweite parallel zur Längsachse der Karosseriestruktur verläuft und er an dieser befestigt ist. Der hohle Längsabschnitt größerer Querschnittsweite wäre dann schräg zur Fahrzeuglängsrichtung verlaufend angeordnet.

In der vorliegenden Ausführungsform der Erfindung hat der stoßfängerseitig angeordnete erste hohle Längsabschnitt eine höhere Stülpfähigkeit als der karosserieseitig angeordnete zweite hohle Längsabschnitt. Hierdurch erfolgt das energieabsorbierende Verformen der Energieabsorptionsvorrichtung 101 im Wesentlichen zu Lasten des ersten hohlen Längsabschnittes 102. Das heißt in dieser Ausführungsform der Erfindung ist der zweite hohle Längsabschnitt der Fortsetzungsabschnitt.

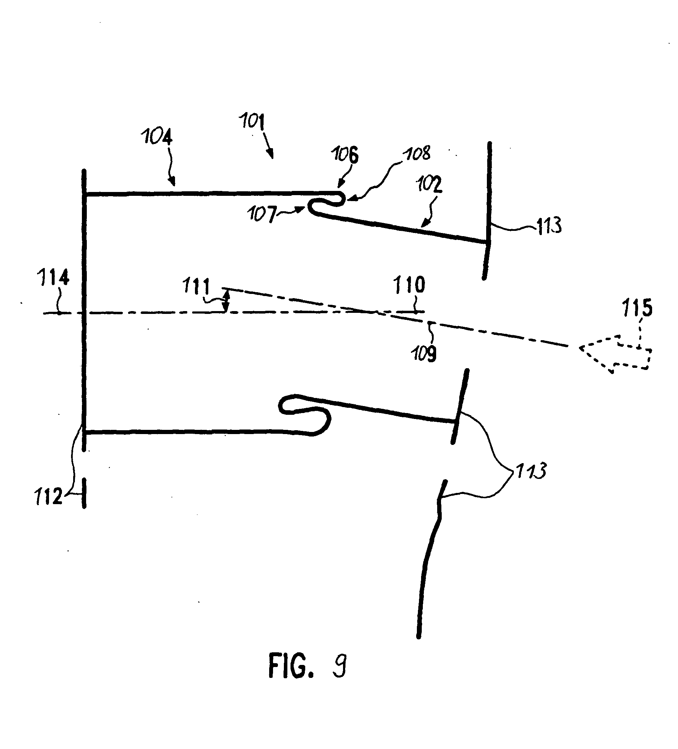

Mit dieser Anordnung können schräg zur Fahrzeuglängsrichtung wirkende Unfallkräfte, insbesondere etwa in Längsrichtung 109 des ersten hohlen Längsabschnittes 102 wirkende Unfallkräfte, besonders gut absorbiert werden, wie aus den schematischen Simulationsdarstellungen der Figuren 9 bis 11 hervorgeht. Die Karosseriestruktur 112 und die Stoßfängeranordnung 113 sind durch das Simulationsmodell bedingt unterbrochen dargestellt und die Karosseriestruktur ist durch eine quer zum zweiten hohlen Längsabschnitt verlaufende Struktur wiedergegeben.

In Figur 9 befindet sich die Energieabsorptionsvorrichtung 101 im Ausgangszustand vor der Absorption der Unfallenergie, d. h. in dem Zustand, wie sie in den Figuren 5 bis 8 gezeigt ist.

Wirkt eine Unfallkraft, beginnt der erste hohle Längsabschnitt 102, sich vom ersten U-Bogen 107 her stülpend plastisch zu verformen. Je mehr die Richtung der Unfallkraft mit der Längsachse des ersten hohlen Längsabschnittes 102 übereinstimmt, desto größer ist der Umfangsbereich des ersten hohlen Längsabschnittes 102, der unmittelbar beginnt, sich stülpend zu verformen.

Eine Abweichung der Richtung der Unfallkraft 115 von der Richtung der Längsachse 109 des ersten hohlen Längsabschnittes 102 wird durch die quasi lose Lagerung des Übergangsbereiches und durch ein stülpendes Verformen kompensiert, das zunächst nur in einem Umfangsabschnitt erfolgt.

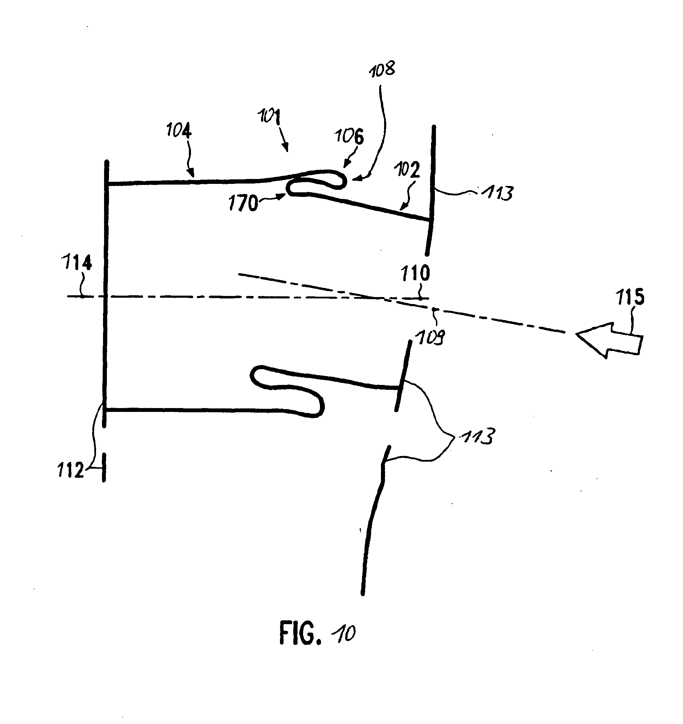

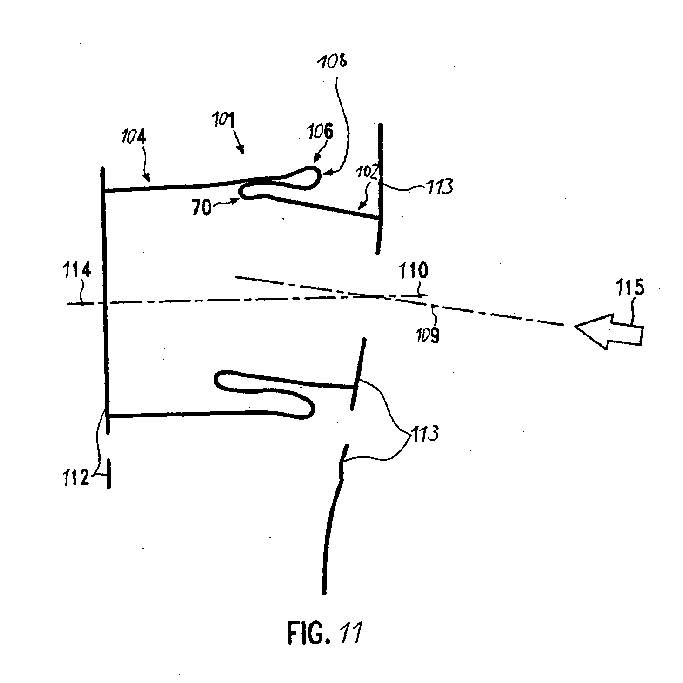

Beim Zusammenteleskopieren wird der erste U-Bogen 107 des Übergangsbereiches 106 aufgebogen und immer neues Material des ersten hohlen Längsabschnittes 102 bildet nun einen vorangehenden Bogen 170. Dieser erreicht die Innenseite des zweiten hohlen Längsabschnittes 104. Der zweite hohle Längsabschnitt 104 bildet dabei eine Führung des ersten hohlen Längsabschnittes 102. Dabei stützt sich der erste hohle Längsabschnitt auf dem zweiten hohlen Längsabschnitt ab und rollt auf diesem ab, wie dies in den Figuren 10 und 11 gezeigt ist.

Die vom schräg ausgerichteten ersten hohlen Längsabschnitt 102 aufgenommene Unfallkraft wird vom zweiten hohlen Längsabschnitt noch verhältnismäßig gerade in die Karosseriestruktur 112 eingeleitet. Mit seiner größeren Querschnittsweite 105 ist der zweite hohle Längsabschnitt 104 dabei gut stabilisiert.

Trotzdem eine Energieabsorptionsvorrichtung verwendet wird, bei welcher die hohlen Längsabschnitte schräg zueinander ausgerichtet sind, wird überraschenderweise bei der Energieabsorption ein guter Ablauf und ein guter Kraftverlauf erreicht. Der Kraftverlauf und die Effizienz der Energieabsorption liegen in einem ähnlichen Bereich wie bei Energieabsorptionsvorrichtungen, bei welchen die hohlen Längsabschnitte gerade zueinander ausgerichtet sind.

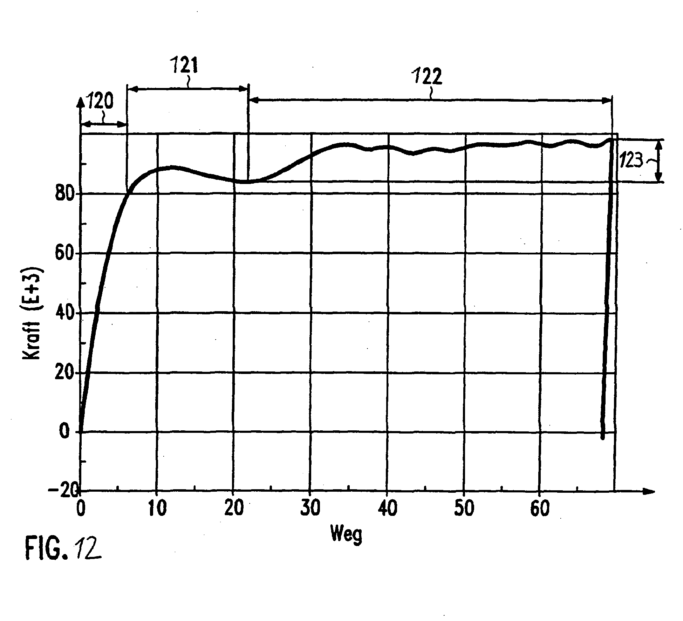

In Figur 12 ist ein Kraftwegdiagramm für die erfindungsgemäße Energieabsorptionsvorrichtung gezeigt. Auf der Abszissenachse ist als Weg die Annäherung der äußeren Enden der Energieabsorptionsvorrichtung aufgetragen und auf der Ordinatenachse die an diesen Enden aufgebrachte Kraft. Ein erster Wegabschnitt 120 enthält den Hookschen Bereich. Mit dem Übergang in einen zweiten Wegabschnitt 121 beginnt die plastische Verformung der Energieabsorptionsvorrichtung. Im Verlaufe des zweiten Wegabschnittes 121 steigt der Kraftaufwand abschnittsweise an und fällt hiernach wieder etwas ab. Dieser erhöhte Kraftaufwand ist für das Aufbiegen des ursprünglichen ersten U-Bogens 107 erforderlich.

Nach dem Absinken des Kraftaufwandes im zweiten Wegabschnitt 121 steigt der Kraftaufwand in einem dritten Wegabschnitt 122 deutlich um einen mit dem Bezugszeichen 123 gekennzeichneten Betrag. Dieser Anstieg des Kraftaufwandes ist für das Verformen des inneren, ersten hohlen Längsabschnittes 102 durch Umstülpen unter Durchmesservergrößerung erforderlich.

Nachfolgend werden erfindungsgemäße Verfahren zum Herstellen der einstückigen Energieabsorptionsvorrichtung 101 der zweiten Ausführungsform der Erfindung beschrieben.

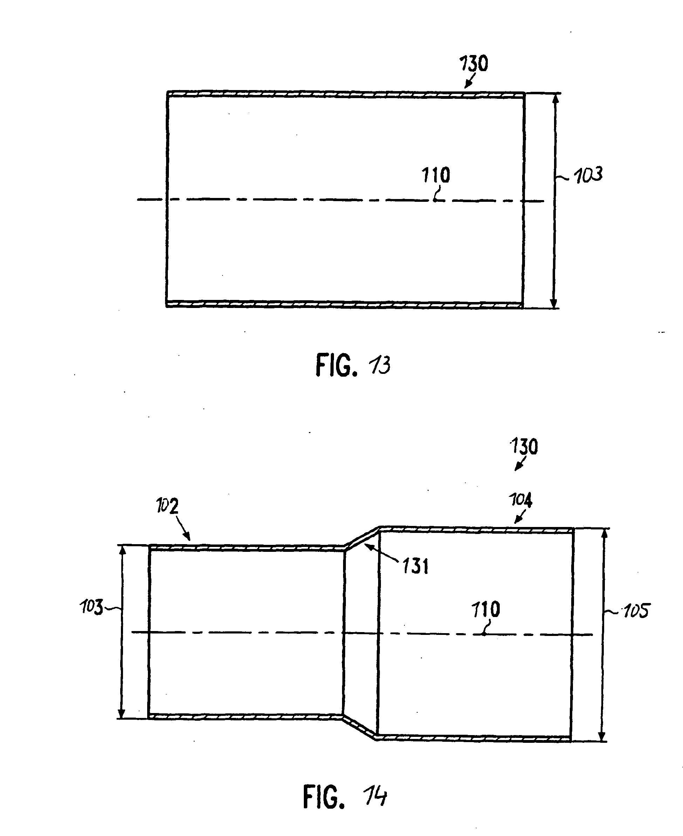

In Figur 13 ist ein Rohr 130 erster Querschnittsweite 103 gezeigt, das bei einer ersten Ausführungsform des efindungsgemäßen Herstellungsverfahrens verwendet wird. Mit einem Innhochdruckumformungsverfahren wird die Querschnittsweite des Rohres 130 abschnittsweise vergrößert. Dabei wird zwischen den so entstehenden hohlen Längsabschnitten 102, 104 ein im Längsschnitt etwa kegelförmiger Übergangsbereich 131 ausgebildet, wie er in Figur 14 gezeigt ist.

Die beiden hohlen Längsabschnitte102, 104 werden nun in Längsrichtung zueinander gedrückt, das heißt der kegelförmige Übergangsbereich 131 wird gestaucht, wobei ein S- oder doppelt-U-förmiger Übergangsbereich entsteht. Anschließend werden die hohlen Längsabschnitte 102, 104 mit einem Werkzeug in eine zueinander winklige Ausrichtung gebracht, wobei sich der Übergangsbereich plastisch verformt und die in den Figuren 5 bis 7 dargestellte Form annimmt.

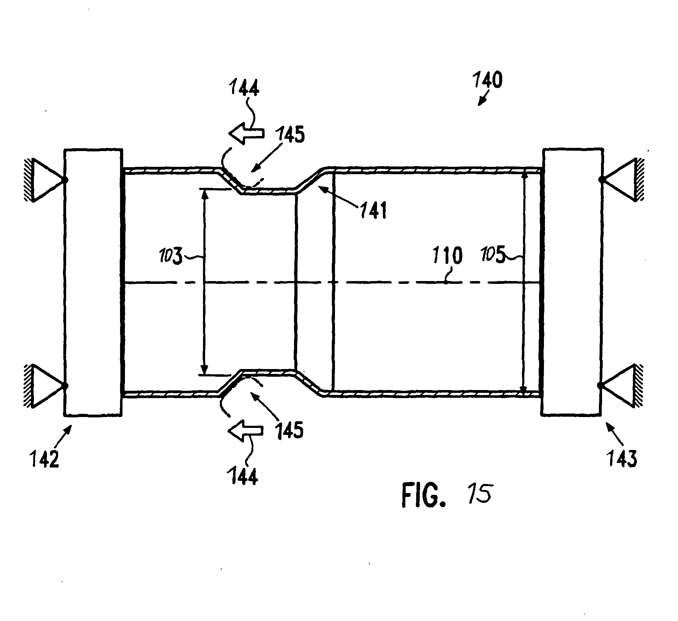

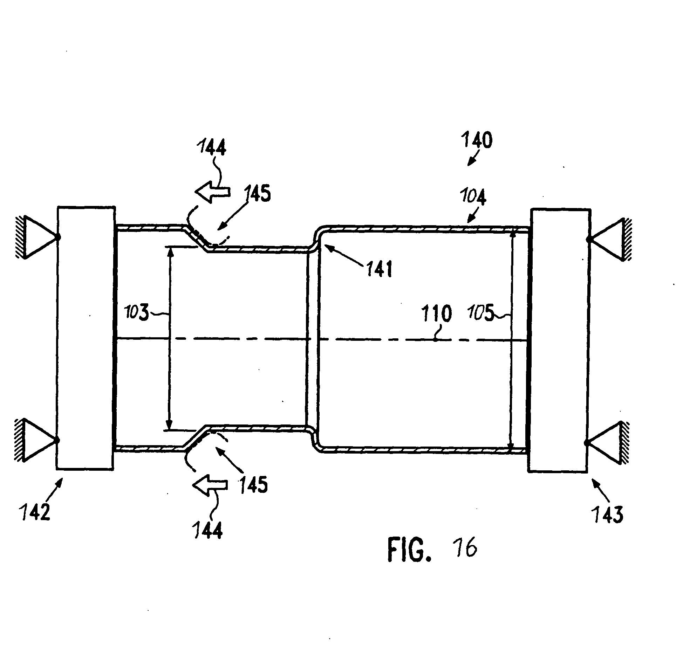

In den Figuren 15 und 16 ist eine zweite Ausführungsform des erfindungsgemäßen Herstellungsverfahrens veranschaulicht. Hier wird ein Rohr 140 verwendet, das wie in Figur 13 gezeigt ausgebildet ist, jedoch eine größere Querschnittsweite hat. Das Rohr 140 ist zwischen axialen Lagern oder Halterungen 142, 143 eingespannt. Mit Hilfe eines mit der in Figur 15 gezeigten, in Richtung des Pfeiles 144 arbeitenden Rollierwerkzeuges 145 wird die Querschnittsweite des Rohres 140 abschnittsweise verengt. Dabei wird ein Übergangsbereich 141 ausgebildet, welcher im Längsschnitt zunächst ein etwa keilförmiges Profil hat.

Durch das Verengen der Querschnittsweite würde sich die Länge des Rohres 140 ohne die axiale Lagerung 142, 143 verlängern. Da die axialen Lagerungen 142, 143 das Rohr 140 jedoch zwingen, seine axiale Länge beizubehalten, wird der Übergangsbereich 141 stülpend verformt. Somit ist das Ausbilden eines S- oder doppel-U-förmigen Übergangsbereiches bei diesem Herstellungsverfahren ein integrierter Vorgang.

Anschließend werden die entstandenen hohlen Längsabschnitte 102, 104 mit Hilfe eines Werkzeuges winklig zueinander ausgerichtet, wobei sich der Übergangsbereich plastisch verformt und die in den Figuren 5 bis 7 gezeigte Form annimmt.

Es ist auch möglich, die Energieabsorptionsvorrichtung mit Rollierwerkzeugen, jedoch ohne axiale Lagerungen 142, 143 herzustellen. Dabei wird der Übergangsbereich 141 nach dem Rollieren wie bei der ersten Ausführungsform des Herstellungsverfahrens gestaucht.

Der zweite U-Bogen 108, das heißt der an den nicht zum umstülpenden Verformen vorgesehenen zweiten hohlen Längsabschnitt 104 angrenzende U-Bogen, kann durch ein Fügeverfahren stabilisiert werden. Damit wird einem Verformen zu Lasten des zweiten hohlen Längsabschnittes entgegengewirkt. Als Fügematerial kann Klebstoff, Schweißmaterial oder Lötmaterial verwendet werden, das in diesen U-Bogen 108 eingebracht wird.

Eine Stabilisierung durch Fügen hat einen ähnlichen Effekt wie eine gute Kaltverfestigung oder das Vorsehen einer Profilierung im zweiten U-Bogen. Diese Maßnahmen können zusätzlich oder alternativ ergriffen werden.

Die Verfestigungsmaßnahmen können auch am ersten U-Bogen 107 vorgenommen werden, wenn der zweite hohle Längsabschnitt zum umstülpenden Verformen vorgesehen ist.

Die Energieabsorptionsvorrichtung kann beispielsweise aus Stählen mit induzierter Plastizität hergestellt werden. Sie erfahren beim Umformen eine wesentliche Erhöhung der Dehnfähigkeit bei größerer Festigkeit. Auf diese Weise kann die Energieabsorptionsvorrichtung auch durch Rollieren unter Verengung der Querschnittsweite hergestellt werden, wobei der Bereich verengter Querschnittsweise, d. h. der erste hohle Längsabschnitt, trotzdem der stülpfähigere Querschnittsabschnitt bleibt, obwohl sich seine Festigkeit durch das Verformen etwas erhöht.

Als Stähle mit induzierter Plastizität können beispielsweise LIP-Stähle (light weight steels with induced plasticity), XIP-Stähle (extremely high strength steels with induced plasticity) oder TWIP-Stähle (twinning induced plasticity) verwendet werden.

Auch die Energieabsorptionsvorrichtung der ersten Ausführungsform der Erfindung kann aus den genannten Stählen hergestellt werden.

## Patentansprüche

1. Energieabsorptionsvorrichtung (1, 101) für eine Stoßfängeranordnung eines Fahrzeugs, mit einem zum Umformen bestimmten, hohlen Längsabschnitt (2, 102), einem sich an den hohlen Längsabschnitt anschließenden gestülpten Bereich (3, 106) und einem mit dem gestülpten Bereich verbundenen Fortsetzungsabschnitt (4, 104),
**dadurch gekennzeichnet,**
**dass** der hohle Längsabschnitt (2, 102) in einem Ausgangszustand vor einer Energieabsorption schrägt zur axialen Richtung des Fortsetzungsabschnitts (4, 104) ausgerichtet ist.

2. Energieabsorptionsvorrichtung nach Anspruch 1,
**dadurch gekennzeichnet,**
**dass** die axiale Richtung des hohlen Längsabschnittes (2, 102) oder des Fortsetzungsabschnittes (4, 104) schräg zu einer Fahrzeuglängsrichtung ausgerichtet ist und die axiale Richtung des jeweils anderen Abschnittes im Wesentlichen parallel zur Fahrzeuglängsrichtung verläuft.

3. Energieabsorptionsvorrichtung nach Anspruch 1 oder 2,
**dadurch gekennzeichnet,**
**dass** der hohle Längsabschnitt (2, 102) um etwa 5° bis 20° schrägt zur axialen Richtung des Fortsetzungsabschnittes (4, 104) ausgerichtet ist, vorzugsweise um etwa 8° bis 12°, besonders bevorzugt um etwa 10°.

4. Energieabsorptionsvorrichtung nach wenigstens einem der vorhergehenden Ansprüche,
**dadurch gekennzeichnet,**
**dass** eine Führung (19, 104) vorgesehen ist, auf welcher der hohle Längsabschnitt (2 102) beim Umformen abrollt.

5. Energieabsorptionsvorrichtung (1) nach wenigstens einem der vorhergehenden Ansprüche, wobei der zum Umformen bestimmte hohle Längsabschnitt (2) schräg zur Fahrzeuglängsrichtung ausgerichtet ist und als Fortsetzungsabschnitt ein Befestigungsabschnitt (4) der Energieabsorptionsvorrichtung vorgesehen ist, welcher eine Befestigungsebene (5) der Energieabsorptionsvorrichtung definiert,
**dadurch gekennzeichnet,**
**dass** die Befestigungsebene (5) in einem Ausgangszustand vor einer Energieabsorption schräg zur Querrichtung des hohlen Längsabschnittes (2) ausgerichtet ist.

6. Energieabsorptionsvorrichtung nach Anspruch 5,
**dadurch gekennzeichnet,**
**dass** die Befestigungsebene (5) etwa senkrecht zur Fahrzeuglängsrichtung ausgerichtet ist.

7. Energieabsorptionsvorrichtung nach wenigstens einem der vorhergehenden Ansprüche, **dadurch gekennzeichnet,**
**dass** der gestülpte Bereich (3) an einem Endbereich (10) der Energieabsorptionsvorrichtung ausgebildet ist.

8. Energieabsorptionsvorrichtung nach wenigstens einem der vorhergehenden Ansprüche,
**dadurch gekennzeichnet,**
**dass** die Energieabsorptionsvorrichtung (1) in Richtung des hohlen Längsabschnittes (2) etwa in Höhe des gestülpten Bereiches (3) an einer Karosseriestruktur (13) befestigbar ist.

9. Energieabsorptionsvorrichtung nach wenigstens einem der vorhergehenden Ansprüche,
**dadurch gekennzeichnet,**
**dass** der gestülpte Bereich (3) eine nur U-förmige Stülpform hat.

10. Energieabsorptionsvorrichtung nach wenigstens einem der Ansprüche 5 bis 9,
**dadurch gekennzeichnet,**
**dass** der Befestigungsabschnitt (4) flanschartig, krempenartig oder kragenartig ausgebildet ist.

11. Fahrzeugstruktur mit einer Energieabsorptionsvorrichtung nach wenigstens einem der vorhergehenden Ansprüche,
**dadurch gekennzeichnet,**
**dass** die Fahrzeugstruktur eine Wandung (19) aufweist, welche eine Führung des hohlen Längsabschnittes (2) bildet, auf welcher dieser beim Umformen abrollbar ist.

12. Energieabsorptionsvorrichtung (101) nach wenigstens einem der Ansprüche 1 bis 4, mit einem ersten hohlen Längsabschnitt (102) erster Querschnittsweite (103) und einem zweiten hohlen Längsabschnitt (104) zweiter Querschnittsweite (105) sowie, als gestülpten Bereich, einem gestülpten Übergangsabschnitt (106) zwischen den hohlen Längsabschnitten,
**dadurch gekennzeichnet,**
**dass** der erste hohle Längsabschnitt (102) und der zweite hohle Längsabschnitt (104) in einem Ausgangszustand vor einer Energieabsorption schräg zueinander ausgerichtet sind.

13. Energieabsorptionsvorrichtung nach Anspruch 12,
**dadurch gekennzeichnet,**
**dass** der stülpfähigere (102) der hohlen Längsabschnitte schräg zur Fahrzeuglängsrichtung ausgerichtet ist.

14. Energieabsorptionsvorrichtung nach Anspruch 12 oder 13,
**dadurch gekennzeichnet,**
**dass** der hohle Längsabschnitt (102) geringerer Querschnittsweite (103) stülpfähiger ist als der hohle Längsabschnitt (104) größerer Querschnittsweite (105).

15. Energieabsorptionsvorrichtung nach Anspruch 14,
**dadurch gekennzeichnet,**
**dass** der hohle Längsabschnitt (104) größerer Querschnittsweite (105) eine Führung des hohlen Längsabschnittes (102) geringerer Querschnittsweite (103) bildet.

16. Verfahren zum Herstellen einer einstückigen Energieabsorptionsvorrichtung (101), welche einen ersten hohlen Längsabschnitt (102) erster Querschnittsweite (103) und einen zweiten hohlen Längsabschnitt (104) zweiter Querschnittsweite (105) sowie einen gestülpten Übergangsbereich (106) zwischen den beiden hohlen Längsabschnitten aufweist, wobei das Verfahren folgende Schritte hat:
abschnittsweises Verändern der Querschnittsweite eines Rohres (130, 140) erster Querschnittsweite auf die zweite Querschnittsweite unter Ausbildung der hohlen Längsabschnitte (102, 104) erster und zweiter Querschnittsweite (103, 105) und
Stauchen des Rohres (130, 140), wobei der gestülpte Übergangsbereich (106) ausgebildet wird,
**dadurch gekennzeichnet,**
**dass** die hohlen Längsabschnitte (102, 104) schräg zueinander ausgerichtet werden.

17. Verfahren nach Anspruch 16,
**dadurch gekennzeichnet,**
**dass** das Rohr (130) erster Querschnittsweite (103) mit Hilfe eines Innenhochdruckumformens abschnittsweise auf zweite Querschnittsweite (105) vergrößert wird.

## Claims

1. Energy absorption device (1, 101) for a bumper arrangement of a vehicle, with a hollow longitudinal section (2, 102) intended to deform, a turned-back region (3, 106) adjoining the hollow longitudinal section and an extension section (4, 104) connected to the turned-back region,
**characterised in that**
the hollow longitudinal section (2, 102) is oriented obliquely to the axial direction of the extension section (4, 104) in an initial state prior to absorbing energy.

2. Energy absorption device as claimed in claim 1,
**characterised in that**
the axial direction of the hollow longitudinal section (2, 102) or the extension section (4, 104) is oriented obliquely to a vehicle longitudinal direction and the axial direction of the respective other section extends essentially parallel with the vehicle longitudinal direction.

3. Energy absorption device as claimed in claim 1 or 2,
**characterised in that**
the hollow longitudinal section (2, 102) is oriented obliquely to the axial direction of the extension section (4, 104) by approximately 5° to 20°, preferably by approximately 8° to 12°, especially preferably by approximately 10°.

4. Energy absorption device as claimed in at least one of the preceding claims,
**characterised in that**
a guide (19, 104) is provided, on which the hollow longitudinal section (2, 102) rolls when deforming.

5. Energy absorption device (1) as claimed in at least one of the preceding claims, in which the hollow longitudinal section (2) intended to deform is oriented obliquely with respect to the vehicle longitudinal direction, and a fixing section (4) of the energy absorption device defining a fixing plane (5) of the energy absorption device is provided as an extension section,
**characterised in that**
the fixing plane (5) is oriented obliquely to the transverse direction of the hollow longitudinal section (2) in an initial state prior to absorbing energy.

6. Energy absorption device as claimed in claim 5,
**characterised in that**
the fixing plane (5) is oriented approximately perpendicular to the vehicle longitudinal direction.

7. Energy absorption device as claimed in at least one of the preceding claims,
**characterised in that**
the turned-back region (3) is disposed on an end region (10) of the energy absorption device.

8. Energy absorption device as claimed in at least one of the preceding claims,
**characterised in that**
the energy absorption device (1) can be affixed to a body structure (13) in the direction of the hollow longitudinal section (2) approximately on a level with the turned-back region (3).

9. Energy absorption device as claimed in at least one of the preceding claims,
**characterised in that**
the turned-back region (3) has an only U-shaped turned-back shape.

10. Energy absorption device as claimed in at least one of claims 5 to 9,
**characterised in that**
the fixing section (4) is of a flange-type, flap-type or collar-type design.

11. Vehicle structure with an energy absorption device as claimed in at least one of the preceding claims,
**characterised in that**
the vehicle structure has a wall (9) which acts as a guide for the hollow longitudinal section (2), on which same is able to roll when deforming.

12. Energy absorption device (101) as claimed in at least one of claims 1 to 4, with a first hollow longitudinal section (102) with a first cross-sectional width (103) and a second hollow longitudinal section (104) with a second cross-sectional width (105), as well as a turned-back transition section (106) between the hollow longitudinal sections serving as the turned-back region,
**characterised in that**
the first hollow longitudinal section (102) and the second hollow longitudinal section (104) are oriented obliquely with respect to one another in an initial state prior to absorbing energy.

13. Energy absorption device as claimed in claim 12,
**characterised in that**
the hollow longitudinal section more capable of being turned back (102) is oriented obliquely to the vehicle longitudinal direction.

14. Energy absorption device as claimed in claim 12 or 13,
**characterised in that**
the hollow longitudinal section (102) with a shorter cross-sectional width (103) is more capable of being turned back than the hollow longitudinal section (104) with a longer cross-sectional width (105).

15. Energy absorption device as claimed in claim 14,
**characterised in that**
the hollow longitudinal section (104) with the longer cross-sectional width (105) acts as a guide for the hollow longitudinal section (102) with a shorter cross-sectional width (103).

16. Method of producing a one-piece energy absorption device (101) comprising a first hollow longitudinal section (102) with a first cross-sectional width (103) and a second hollow longitudinal section (104) with a second cross-sectional width (105) as well as a turned-back transition region (106) between the two hollow longitudinal sections, which method comprises the following steps:
changing the cross-sectional width of a tube (130, 140) with a first cross-sectional width to the second cross-sectional width in certain portions to form the hollow longitudinal sections (102, 104) with a first and second cross-sectional width (103, 105) and
folding the tube (130, 140), thereby forming the turned-back transition region (106),
**characterised in that**
the hollow longitudinal sections (102, 104) are oriented obliquely with respect to one another.

17. Method as claimed in claim 16,
**characterised in that**
the tube (130) with the first cross-sectional width (103) is enlarged to the second cross-sectional width (105) in certain portions with the aid of an internal high-pressure deformation process.

## Revendications

1. Dispositif d'absorption d'énergie (1, 101) pour un dispositif d'amortissement des chocs d'un véhicule, avec un tronçon longitudinal creux (2, 102) qui est destiné à être déformé, une zone retournée (3, 106) qui fait suite au tronçon longitudinal creux, et un tronçon de prolongement (4, 104) qui est relié à la zone retournée,
**caractérisé en ce que** le tronçon longitudinal creux (2, 102), dans une position initiale avant une absorption d'énergie, est incliné par rapport au sens axial du tronçon de prolongement (4, 104).

2. Dispositif d'absorption d'énergie selon la revendication 1, **caractérisé en ce que** le sens axial du tronçon longitudinal creux (2, 102) ou du tronçon de prolongement (4, 104) est incliné par rapport à un sens longitudinal du véhicule, et le sens axial de l'autre tronçon est globalement parallèle au sens longitudinal du véhicule.

3. Dispositif d'absorption d'énergie selon la revendication 1 ou 2, **caractérisé en ce que** le tronçon longitudinal creux (2, 102) est incliné d'environ 5° à 20° par rapport au sens axial du tronçon de prolongement (4, 104), de préférence d'environ 8° à 12°, plus spécialement d'environ 10°.

4. Dispositif d'absorption d'énergie selon l'une au moins des revendications précédentes, **caractérisé en ce qu'**il est prévu un guide (19, 104) sur lequel le tronçon longitudinal creux (2, 102) roule lors de la déformation.

5. Dispositif d'absorption d'énergie (1) selon l'une au moins des revendications précédentes, étant précisé que le tronçon longitudinal creux (2) destiné à être déformé est incliné par rapport au sens longitudinal du véhicule et qu'il est prévu comme tronçon de prolongement un tronçon de fixation (4) du dispositif d'absorption d'énergie qui définit un plan de fixation (5) du dispositif d'absorption d'énergie,
**caractérisé en ce que** le plan de fixation (5), dans un état initial avant une absorption d'énergie, est incliné par rapport au sens transversal du tronçon longitudinal creux (2).

6. Dispositif d'absorption d'énergie selon la revendication 5, **caractérisé en ce que** le plan de fixation (5) est à peu près perpendiculaire au sens longitudinal du véhicule.

7. Dispositif d'absorption d'énergie selon l'une au moins des revendications précédentes, **caractérisé en ce que** la zone retournée (3) est formée sur une zone d'extrémité (10) du dispositif d'absorption d'énergie.

8. Dispositif d'absorption d'énergie selon l'une au moins des revendications précédentes, **caractérisé en ce qu'**il est apte à être fixé à une structure de carrosserie (13) à peu près à la hauteur de la zone retournée (3), dans le sens du tronçon longitudinal creux (2).

9. Dispositif d'absorption d'énergie selon l'une au moins des revendications précédentes, **caractérisé en ce que** la zone retournée (3) a une forme retournée seulement en U.

10. Dispositif d'absorption d'énergie selon l'une au moins des revendications 5 à 9, **caractérisé en ce que** le tronçon de fixation (4) a la forme d'une bride, d'un rebord ou d'une collerette.

11. Structure de véhicule avec un dispositif d'absorption d'énergie selon l'une au moins des revendications précédentes, **caractérisée en ce qu'**elle présente une paroi (19) qui forme un guide du tronçon longitudinal creux (2) sur lequel ce dernier est apte à rouler lors de la déformation.

12. Dispositif d'absorption d'énergie (101) selon l'une au moins des revendications 1 à 4, avec un premier tronçon longitudinal creux (102) présentant une première largeur de section transversale (103), et un second tronçon longitudinal creux (104) présentant une seconde largeur de section transversale (105), et comme zone retournée un
tronçon de transition retourné (106) entre les tronçons longitudinaux creux,
**caractérisé en ce que** le premier tronçon longitudinal creux (102) et le second tronçon longitudinal creux (104), dans un état initial avant une absorption d'énergie, sont inclinés l'un par rapport à l'autre.

13. Dispositif d'absorption d'énergie selon la revendication 12, **caractérisé en ce que** le tronçon creux le plus apte à être retourné (102) est incliné par rapport au sens longitudinal du véhicule.

14. Dispositif d'absorption d'énergie selon la revendication 12 ou 13, **caractérisé en ce que** le tronçon longitudinal creux (102) de plus petite largeur de section transversale (103) est plus apte à être retourné que le tronçon longitudinal creux (104) de plus grande largeur de section transversale (105).

15. Dispositif d'absorption d'énergie selon la revendication 14, **caractérisé en ce que** le tronçon longitudinal creux (104) de plus grande largeur de section transversale (105) forme un guide du tronçon longitudinal creux (102) de plus petite largeur de section transversale (103).

16. Procédé pour fabriquer un dispositif d'absorption d'énergie (101) d'une seule pièce qui comporte un premier tronçon longitudinal creux (102) présentant une première largeur de section transversale (103), et un second tronçon longitudinal creux (104) présentant une seconde largeur de section transversale (105), ainsi qu'une zone de transition retournée (106) entre les deux tronçons longitudinaux creux, le procédé ayant les étapes suivantes :
modification locale de la largeur de section transversale d'un tube (130, 140) présentant une première largeur de section transversale jusqu'à obtention de la seconde largeur de section transversale, en formant les tronçons longitudinaux creux (102, 104) présentant les première et seconde largeurs de section transversale (103, 105), et écrasement du tube (130, 140), moyennant quoi la zone de transmission retournée (106) est formée,
**caractérisé en ce que** les tronçons longitudinaux creux (102, 104) sont inclinés l'un par rapport à l'autre.

17. Procédé selon la revendication 16, **caractérisé en ce que** le tube (130) présentant la première largeur de section transversale (103) est agrandi localement par déformation par haute pression interne jusqu'à obtention de la seconde largeur de section transversale (105).
